# EUROPEAN PATENT APPLICATION

(11) **EP 4 712 360 A1**
(43) Date of publication of application: **18.03.2026**
(21) Application number: 24862981.8
(22) Date of filing: 27.06.2024
(51) Int. Cl.: H04B 7/06, H04B 7/0491, H04L 5/00, H04W 84/12

(54) **ELECTRONIC DEVICE AND OPERATING METHOD THEREOF**

(30) Priority: 06.09.2023 KR 20230118527; 17.10.2023 KR 20230138661
(71) Applicant: Samsung Electronics Co., Ltd., Suwon-si, Gyeonggi-do 16677 (KR)
(72) Inventor: CHOI, Junsu, Suwon-si, Gyeonggi-do 16677 (KR)
(74) Representative: Gulde & Partner
(86) International application number: PCT/KR2024/008995
(87) International publication number: WO 2025/053398

(57) **Abstract**

An electronic device according to one embodiment may comprise a wireless communication circuit for transmitting and receiving wireless signals. The electronic device may comprise: a processor operatively connected to the wireless communication circuit; and a memory for storing instructions. When executed individually or collectively by the processor, the instructions cause the electronic device to: transmit, on the basis of subcarriers in a millimeter wave band, one or more sector sweep frames for beamforming; and receive feedback information about the one or more sector sweep frames through the millimeter wave band. The feedback information can include: a sector ID of a sector sweep frame received as the strongest signal from an external electronic device, from among the one or more sector sweep frames; and a subcarrier index of the sector sweep frame received as the strongest signal.

## Description

### Technical Field

The disclosure relates to an electronic device and an operating method thereof.

### Description of Related Art

With the development of electronic devices such as smartphones, tablets, personal computers (PCs), or laptops, the demand for high-speed wireless connections has grown explosively. With such a trend and the increasing demand for high-speed wireless connections, the Institute of Electrical and Electronic Engineers (IEEE) 802.11 wireless communication standard is firmly established as a representative and general-purpose high-speed wireless communication standard in the information technology (IT) industry. Early wireless local area network (WLAN) technology developed around 1997 supported transmission speeds of up to 1 to 2 Mbps. Since then, as WLAN technology has steadily developed based on the demand for faster wireless connections, new WLAN technologies that improve transmission speeds, such as IEEE 802.11n, 802.11ac, or 802.11ax, have been steadily developed. Currently, the latest standard, IEEE 802.11ax, has a maximum transmission speed of several Gbps.

Currently, WLANs encompass not only private places such as homes, but also various public places such as offices, airports, stadiums, or stations, providing high-speed wireless connections to users throughout society. Accordingly, the WLAN has had a significant impact on people's lifestyle or culture, and WLAN has now become a way of life in modern times.

The above information is simply presented as related art to help with the understanding of the present disclosure. No statements or assertions are made as to whether any of the above is applicable as a prior art related to the disclosure.

### Disclosure of the Invention

### Technical Solutions

An electronic device incorporating features of the present disclosure may include a wireless communication circuit configured to transmit and receive a wireless signal. The electronic device may include a processor operatively connected to the wireless communication circuit. The electronic device may include a memory including instructions. The instructions, when executed by the processor individually or collectively, may cause the electronic device to transmit one or more sector sweep frames for beamforming, based on sub-carriers of a millimeter wave band. The instructions, when executed by the processor individually or collectively, may cause the electronic device to receive feedback information on the one or more sector sweep frames through the millimeter wave band. The feedback information may include a sector identification (ID) of a sector sweep frame received with a strongest signal by an external electronic device among the one or more sector sweep frames. The feedback information may include a sub-carrier index of the sector sweep frame received with the strongest signal.

A method of operating an electronic device incorporating features of the present disclosure may include transmitting one or more sector sweep frames for beamforming, based on sub-carriers of a millimeter wave band. The method may include receiving feedback information on the one or more sector sweep frames through the millimeter wave band. The feedback information may include a sector ID of a sector sweep frame received with a strongest signal by an external electronic device among the one or more sector sweep frames. The feedback information may include a sub-carrier index of the sector sweep frame received with the strongest signal.

An electronic device incorporating features of the present disclosure may include a wireless communication circuit configured to transmit and receive a wireless signal. The electronic device may include a processor operatively connected to the wireless communication circuit. The electronic device may include a memory including instructions. The instructions, when executed by the processor individually or collectively, may cause the electronic device to receive one or more sector sweep frames for beamforming from an external electronic device through a millimeter wave band. The instructions, when executed by the processor individually or collectively, may cause the electronic device to transmit feedback information on the one or more sector sweep frames to the external electronic device based on sub-carriers of the millimeter wave band. The feedback information may include a sector ID of a sector sweep frame received with a strongest signal among the one or more sector sweep frames. The feedback information may include a sub-carrier index of the sector sweep frame received with the strongest signal.

A method of operating an electronic device incorporating features of the present disclosure may include receiving one or more sector sweep frames for beamforming from an external electronic device through a millimeter wave band. The method may include transmitting feedback information on the one or more sector sweep frames to the external electronic device based on sub-carriers of the millimeter wave band. The feedback information may include a sector ID of a sector sweep frame received with a strongest signal among the one or more sector sweep frames. The feedback information may include a sub-carrier index of the sector sweep frame received with the strongest signal.

### BRIEF DESCRIPTION OF THE DRAWINGS

FIGS. 1 and 2 are diagrams illustrating a wireless local area network (WLAN) system according to an embodiment;
FIG. 3 is a diagram illustrating a link setup operation according to an embodiment;
FIG. 4 is a diagram illustrating sector sweep of beamforming training;
FIG. 5 is a diagram illustrating an analog beamforming system;
FIGS. 6 and 7 are diagrams illustrating changes in bandwidths according to frequency bands;
FIGS. 8 and 9 are diagrams illustrating a beam formed through sub-carriers in a millimeter wave band;
FIG. 10 illustrates a schematic block diagram of an access point (AP) according to an embodiment;
FIG. 11 illustrates a schematic block diagram of a station (STA) according to an embodiment;
FIGS. 12A and 12B are diagrams illustrating sector sweep of beamforming training according to an embodiment;
FIGS. 13 to 15 are diagrams illustrating an area in which feedback information about a sector sweep frame is embedded, according to an embodiment;
FIG. 16 is a diagram illustrating a sub-carrier group-based operation according to an embodiment;
FIGS. 17 and 18 are flowcharts illustrating an operating method of an electronic device according to an embodiment; and
FIG. 19 is a block diagram of an electronic device in a network environment according to an embodiment.

### DETAILED DESCRIPTION

Hereinafter, embodiments will be described in detail with reference to the accompanying drawings. When describing the embodiments with reference to the accompanying drawings, like reference numerals refer to like elements and a repeated description related thereto will be omitted.

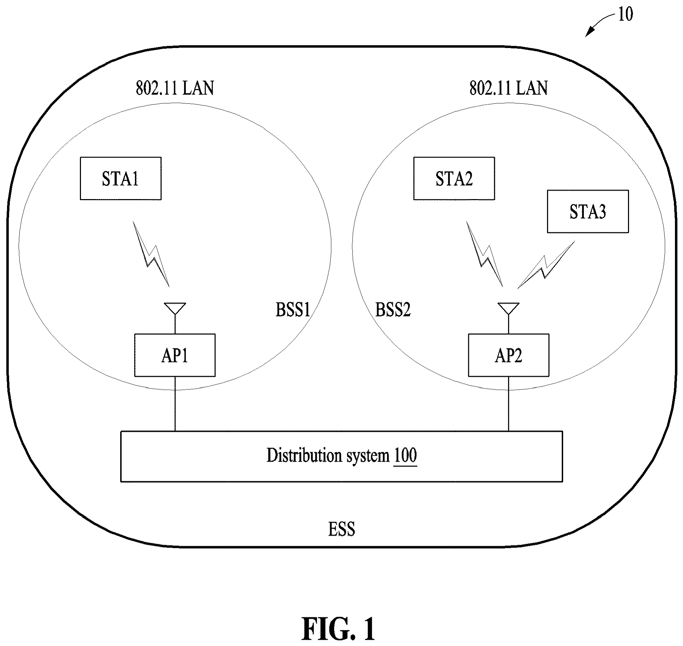

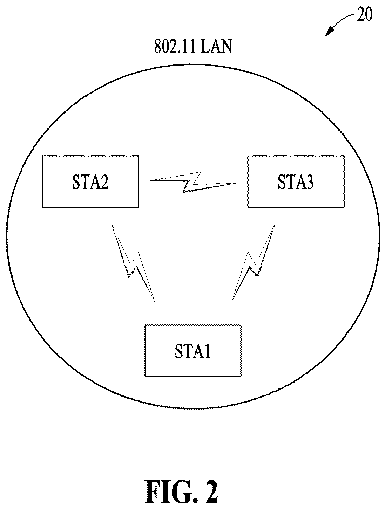

FIGS. 1 and 2 are diagrams illustrating a wireless local area network (WLAN) system according to an embodiment.

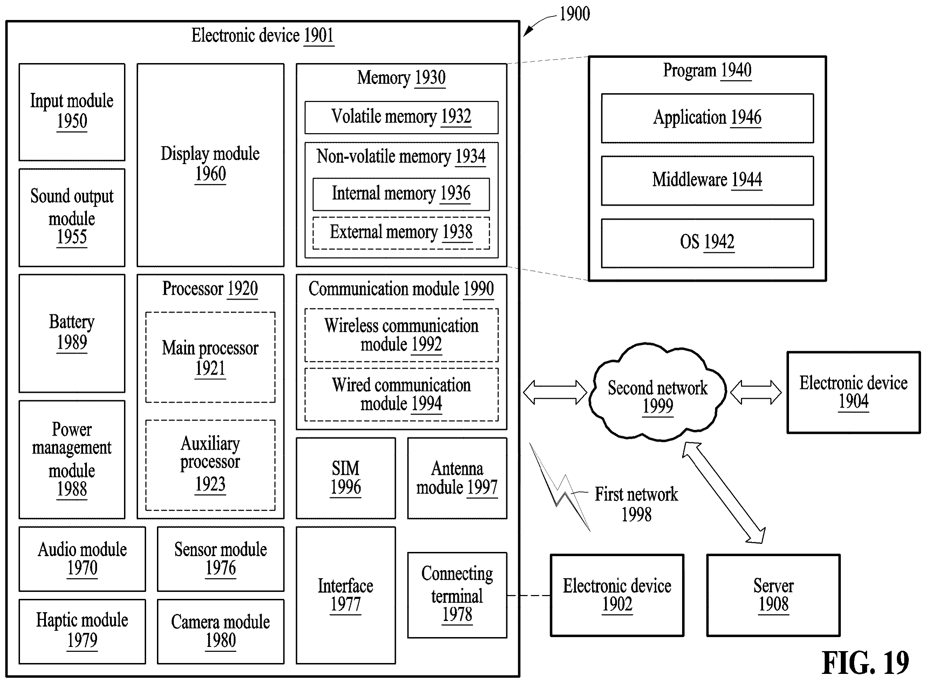

Referring to FIG. 1, according to an embodiment, a WLAN system 10 may refer to an infrastructure mode in which an access point (AP) is present in a structure of a WLAN of the Institute of Electrical and Electronic Engineers (IEEE) 802.11 standard. The WLAN system 10 may include one or more basic service sets (BSSs) (e.g., BSS1 and BSS2). The BSS (e.g., BSS1 or BSS2) may refer to a set of APs (e.g., an electronic device 1904 of FIG. 19) and stations (STAs) (e.g., an electronic device 1901 of FIG. 19) that may communicate with each other with a successful synchronization. The BSS1 may include AP1 and STA1, and the BSS2 may include AP2, STA2, and STA3.

According to an embodiment, the WLAN system 10 may include at least one STA (e.g., STA1 to STA3), a plurality of APs (e.g., AP1 and AP2) providing a distribution service, and a distribution system 100 configured to connect the plurality of APs (e.g., AP1 and AP2). The distribution system 100 may implement an extended service set (ESS) by connecting a plurality of BSSs (e.g., BSS1 and BSS2). The ESS may be used as a term to denote one network including the plurality of APs (e.g., AP1 and AP2) connected via the distribution system 100. The plurality of APs (e.g., AP1 and AP2) included in one ESS may have the same service set identification (SSID).

According to an embodiment, the STAs (e.g., STA1 to STA3) may be an arbitrary functional medium including a medium access control (MAC) and wireless-medium physical layer interface conforming to the IEEE 802.11 standard. The term "STA" (e.g., STA1 to STA3) may be used to collectively refer to both an AP and a non-AP STA. The STA (e.g., STA1 to STA3) may be referred to by various names, such as an electronic device, a mobile terminal, a wireless device, a wireless transmit/receive unit (WTRU), user equipment (UE), a mobile station (MS), a mobile subscriber unit, or simply, a user.

Referring to FIG. 2, according to an embodiment, a WLAN system 20 may represent an ad-hoc mode in which a network is established and communicated between a plurality of STAs (e.g., STA1 to STA3) without any AP in the structure of a WLAN of the IEEE 802.11 standard, as opposed to the WLAN system 10 of FIG. 1. The WLAN system 20 may include a BSS operating in an ad-hoc mode, that is, an independent BSS (IBSS).

According to an embodiment, since the IBSS does not include any AP, a centralized management entity that performs a management function at a center may not be present. In the IBSS, STAs may be managed in a distributed manner. In the IBSS, all STAs may be mobile STAs, and a self-contained network may be configured since an access to a distribution system may not be present.

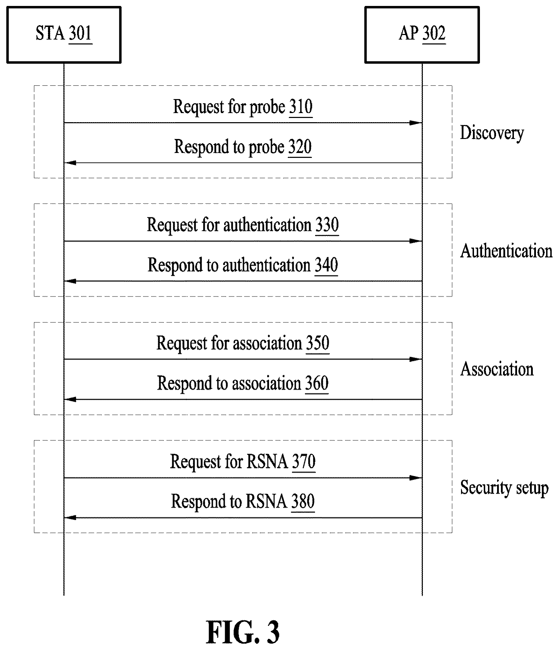

FIG. 3 is a diagram illustrating an example of a link setup operation according to an embodiment.

Referring to FIG. 3, according to an embodiment, the link setup operation may be performed between devices (e.g., a STA 301 and an AP 302) to communicate with each other. For the link setup, operations for network discovery, execution of authentication, establishing association, and setting the security may be performed. The link setup operation may also be referred to as a session initiation operation or a session setup operation. In addition, the operations of discovery, authentication, association, and setting security of the link setup operation may be collectively referred to as an association operation.

According to an embodiment, the network discovery operation may include operations 310 and 320. In operation 310, the STA 301 (e.g., the electronic device 1901 of FIG. 19) may transmit a probe request frame to probe which AP (e.g., an electronic device 1902 or the electronic device 1904 of FIG. 19) exists and may wait for a response to the probe request frame. The STA 301 may find a network to participate in by performing a scanning operation to access the network. The probe request frame may include information of the STA 301 (e.g., a device name and/or an address of the STA 301). The scanning operation in operation 310 may refer to an active scanning operation. In operation 320, the AP 302 may transmit a probe response frame to the STA 301 that has transmitted the probe request frame, in response to the probe request frame. The probe response frame may include information of the AP 302 (e.g., a device name and/or network information of the AP 302). While FIG. 3 shows that the network discovery operation is performed through active scanning, embodiments are not necessarily limited thereto. In a case that the STA 301 performs passive scanning, the operation of transmitting the probe request frame may be omitted. The STA 301 that performs passive scanning may receive a beacon frame transmitted by the AP 302 and perform the following subsequent procedures.

According to an embodiment, after the STA 301 discovers the network, an authentication operation including operations 330 and 340 may be performed. In operation 330, the STA 301 may transmit an authentication request frame to the AP 302. In operation 340, the AP 302 may determine whether to allow authentication for the corresponding STA 301 based on information included in the authentication request frame. The AP 302 may provide a result of the authentication processing to the STA 301 via an authentication response frame. The authentication frame used for the authentication request/response may correspond to a management frame.

According to an embodiment, the authentication frame may include information about an authentication algorithm number, an authentication transaction sequence number, a status code, a challenge text, a robust security network (RSN), and/or a finite cyclic group.

According to an embodiment, after successful authentication of the STA 301, an association operation including operations 350 and 360 may be performed. In operation 350, the STA 301 may transmit an association request frame to the AP 302. In operation 360, the AP 302 may transmit an association response frame to the STA 301 in response to the association request frame.

According to an embodiment, the association request frame and/or the association response frame may include information related to various capabilities. For example, the association request frame may include information related to various capabilities, such as information related to a beacon listening interval, an SSID, supported rates, supported channels, an RSN, a mobility domain, supported operating classes, a traffic indication map (TIM) broadcast request, and/or an interworking service capability. For example, the association response frame may include information related to various capabilities, for example, information such as a status code, association ID (AID), supported rates, an enhanced distributed channel access (EDCA) parameter set, a received channel power indicator (RCPI), a received signal-to-noise indicator (RSNI), a mobility domain, a timeout interval (e.g., an association comeback time), an overlapping BSS scan parameter, a TIM broadcast response, and/or a quality of service (QoS) map.

According to an embodiment, after the STA 301 is successfully associated with the network, a security setup operation including operations 370 and 380 may be performed. The security setup operation may be performed using a robust security network association (RSNA) request/response. For example, the security setup operation may include an operation of performing private key setup through 4-way handshaking using an extensible authentication protocol over a LAN (EAPOL) frame. The security setup operation may be performed according to a security scheme that is not defined in the IEEE 802.11 standard.

According to an embodiment, a security session may be set between the STA 301 and the AP 302 according to the security setup operation, and the STA 301 and the AP 302 may proceed with secure data communication.

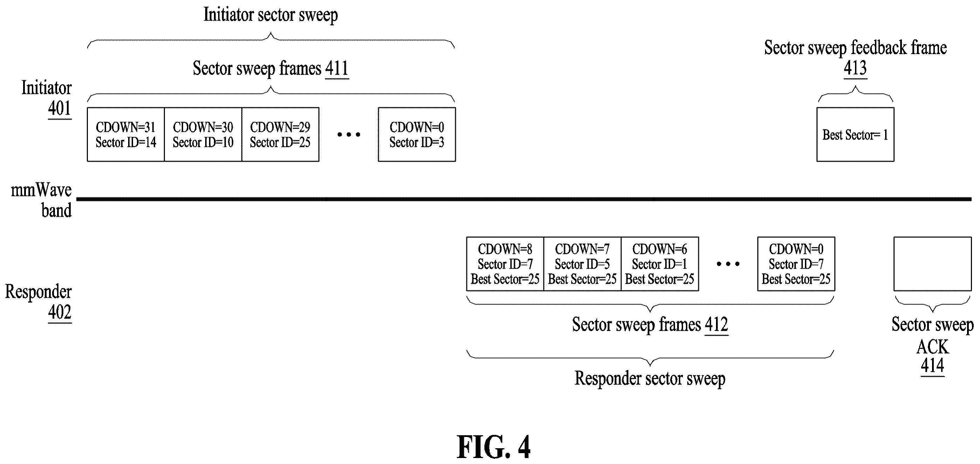

FIG. 4 is a diagram illustrating sector sweep of beamforming training.

When electromagnetic waves propagate through a wireless medium, they are accompanied by signal attenuation that is inversely proportional to the square of a wavelength. Therefore, signals in a high-frequency band with a small wavelength have greater signal attenuation than general communication signals. In addition, signals in the high-frequency band have characteristics of less diffraction, stronger straightness, and lower transmittance. In order to use signals in the high-frequency (e.g., millimeter waves (e.g., 24 GHz)) band, a transmission end and a reception end need to match beam directions. The IEEE 802.11ad/ay standard defines a beam training protocol to obtain a maximum beamforming gain by matching the beam directions of the transmission end and the reception end.

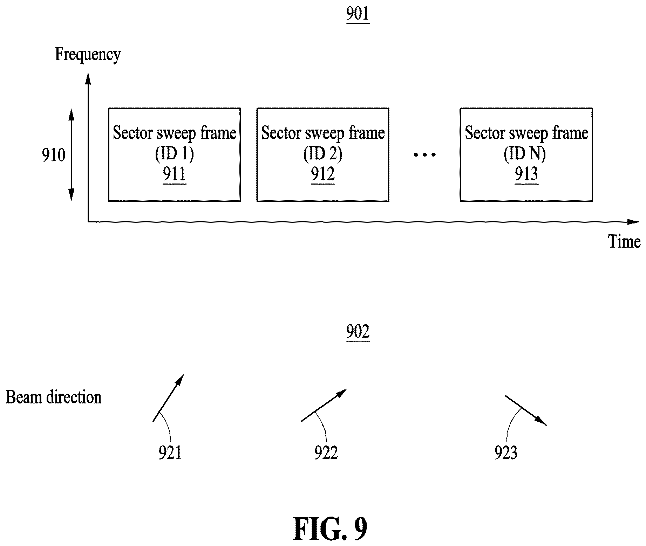

Referring to FIG. 4, an example of sector sweep of beamforming for communication in the millimeter wave band may be shown. An initiator 401 may generate sector sweep frames 411. The sector sweep frames 411 may be transmitted externally based on different beam directions, respectively (e.g., see FIG. 9). Different sector IDs may be allocated to the sector sweep frames 411, respectively. The sector ID may correspond to a beam direction in which a sector sweep frame is transmitted. Each of the sector sweep frames 411 may be sequentially transmitted based on a countdown (CDOWN). Each of the sector sweep frames 411 may be transmitted through the millimeter wave band.

A responder 402 may determine a sector sweep frame received with a strongest signal among the received sector sweep frames 411. The responder 402 may generate sector sweep frames 412 by including information about the sector sweep frame received with the strongest signal (e.g., best sector ID 25) therein. The sector sweep frames 412 may be transmitted externally based on different beam directions (e.g., see FIG. 9). Different sector IDs may be allocated to the sector sweep frames 412, respectively. The sector ID may correspond to a beam direction in which a sector sweep frame is transmitted. Each of the sector sweep frames 412 may be sequentially transmitted based on a countdown (CDOWN). Each of the sector sweep frames 412 may be transmitted through the millimeter wave band.

The initiator 401 may determine a sector sweep frame received with a strongest signal among the received sector sweep frames 412. The initiator 401 may generate a sector sweep feedback frame 413 by including information about the sector sweep frame received with the strongest signal (e.g., best sector ID 1) therein. The initiator 401 may transmit the sector sweep feedback frame 413 to the responder 402. The responder 402 may return a sector sweep acknowledgment frame 414 to the initiator 401 in response to the reception of the sector sweep feedback frame 413.

After receiving at least one of the sector sweep frames 412 from the responder 402, the initiator 401 may determine a beam direction. The initiator 401 may perform beamforming based on the determined beam direction. After receiving the sector sweep feedback frame 413 from the initiator 401, the responder 402 may determine the beam direction. The responder 402 may perform beamforming based on the determined beam direction.

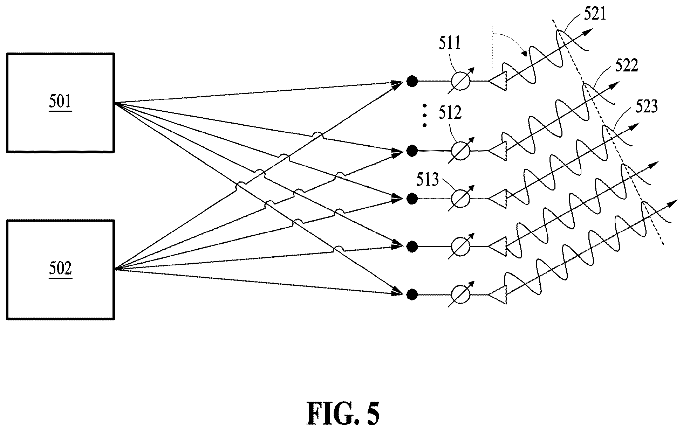

FIG. 5 is a diagram illustrating an analog beamforming system.

Referring to FIG. 5, in an analog beamforming system, processors 501 and 502 may determine beam directions based on feedback information (e.g., a sector ID) about a sector sweep frame. The processors 501 and 502 may determine a phase delay to be applied to each of antennas (e.g., 511, 512, and 513) based on the determined beam directions.

The antennas (e.g., 511, 512, and 513) may be physically located at different locations. For example, the physical location of the antenna 511 may be different from the physical location of the antenna 512. There may be a difference in distances at which signals (e.g., signals transmitted by respective antennas) propagate, according to a difference in location between the antennas and directions of signals transmitted by the antennas. For example, a propagation distance of a signal 521 transmitted by the antenna 511 may be shorter than a propagation distance of a signal 522 transmitted by the antenna 512. For example, a propagation distance of a signal 523 transmitted by the antenna 513 may be longer than the propagation distance of the signal 522 transmitted by the antenna 512. The propagation distance of each of signals transmitted targeting the same point and/or the same direction may be different. Considering the difference in propagation distance, the processors 501 and 502 may determine the phases of the signals differently (e.g., determine a phase delay to be applied to each of the signals).

The processors 501 and 502 may divide the difference in propagation distance by a frequency of a signal. For example, the difference between the propagation distance of the signal 522 and the propagation distance of the signal 521 may be divided by a frequency of the signal 521. The result of the division may be a phase delay value of the signal 522 with respect to the signal 521.

The processors 501 and 502 may have determined the phase delay to be applied to the antennas. Based on the determined phase delay, the antennas (e.g., 511, 512, and 513) may generate signals (e.g., 521, 522, and 523), respectively. The generated signals (e.g., 521, 522, and 523) may be synthesized with each other during the propagation process. That is, the signals (e.g., 521, 522, and 523) may be synthesized to form beams. Beams resulting from the synthesis of the signals (e.g., 521, 522, and 523) may be wireless signals focused in a targeted direction. The processors 501 and 502 may transmit data in the targeted direction through the formed beam.

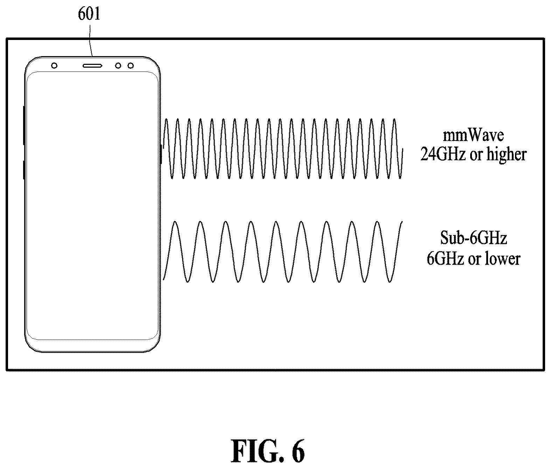

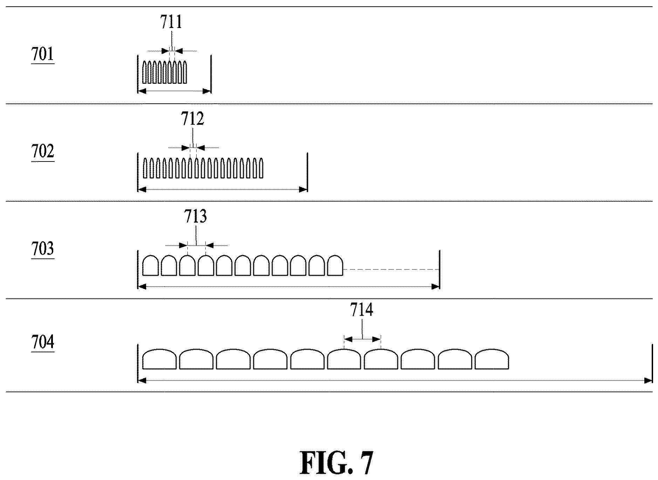

FIGS. 6 and 7 are diagrams illustrating changes in bandwidths according to frequency bands.

Referring to FIG. 6, an electronic device 601 may use signals in various frequency bands. The electronic device 601 may be a device that supports an orthogonal frequency division multiplexing (OFDM) system. The electronic device 601 may be a device that uses the millimeter wave band in the OFDM system. Signals in the millimeter wave band (e.g., signals in the band of 24 GHz or higher) may have a higher frequency than signals in other frequency bands (e.g., signals in the band of 6 GHz or lower).

Referring to FIG. 7, the higher the frequency band of a carrier, the wider the bandwidth of the carrier. For example, a frequency band of a carrier may become higher as it goes from a first frequency band 701 to a fourth frequency band 704, and a bandwidth of a carrier may become wider as it goes from the first frequency band 701 to the fourth frequency band 704. As a bandwidth of a carrier becomes wider, a sub-carrier spacing (e.g., a frequency spacing of sub-carriers) may also increase. For example, a sub-carrier spacing 714 of the fourth frequency band 704 may be larger than a sub-carrier spacing 711 of the first frequency band 701. For example, the fourth frequency band 704 may be a millimeter wave band. The sub-carrier spacing (e.g., 714) in the millimeter wave band (e.g., 704) may be significantly larger than sub-carrier spacings (e.g., 711, 712, 713) in other frequency bands (e.g., 701, 702, 703).

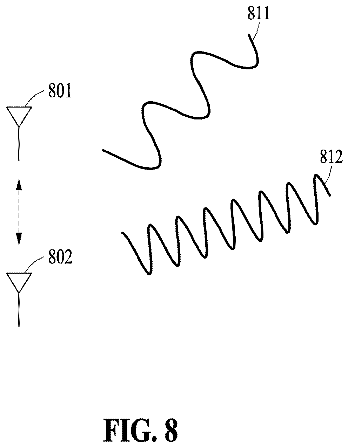

FIGS. 8 and 9 are diagrams illustrating a beam formed through sub-carriers in a millimeter wave band.

Referring to FIG. 8, in the OFDM system, results of analog beamforming performed using the millimeter wave band may be confirmed. An electronic device (e.g., the electronic device 601 of FIG. 6) may determine a phase delay to be applied to antennas (e.g., 801 and 802). Based on the determined phase delay, each of the antennas (e.g., 801 and 802) may generate a signal. The generated signals may be synthesized with each other during the propagation process. Beams (e.g., 811 and 812) resulting from the synthesis of the signals may be wireless signals focused in a targeted direction. Since the beams (e.g., 811 and 812) are the result of synthesizing the signals, it is necessary to not confuse the beams (e.g., 811 and 812) of FIG. 8 with the signals (e.g., 521, 522, and 523) of FIG. 5. The electronic device 601 may form the beams (e.g., 811 and 812) to transmit data (or information) in the targeted direction. However, the beams (e.g., 811 and 812) formed by the electronic device 601 may transmit data in a non-targeted direction.

In FIG. 5, since a single carrier is assumed, the frequencies used are also the same. Referring to FIG. 9, when a beam is formed using the same frequency band 910 of a single carrier, a sector sweep frame may be transmitted in a targeted direction (e.g., see 901 and 902). For example, a sector sweep frame 911 may be transmitted in the targeted direction based on a beam direction 921. For example, a sector sweep frame 913 may be transmitted in a targeted direction based on a beam direction 923.

However, since the electronic device 601 of FIG. 6 is a device that supports the OFDM system, beams may be formed through a plurality of signals (e.g., a plurality of sub-carriers) having various frequencies. In the OFDM system, the sub-carriers have different wavelengths from each other, and therefore, each of the sub-carriers may be transmitted at a different angle (e.g., an angle different from a targeted angle). Accordingly, a beam may be formed in a non-targeted direction by synthesizing sub-carriers transmitted at different angles.

A frequency band (e.g., a band of 6 GHz or lower) used before the millimeter wave band is at a level where such angle changes may be ignored. For example, when a bandwidth of 80 MHz is used in a 5 GHz band, a change ratio between a wavelength corresponding to a center frequency of the bandwidth and a wavelength corresponding to an end frequency of the bandwidth may be 1.01. When this is converted into an angle, data may be transmitted in a direction that is deviated about 6 degrees from a target direction.

However, the electronic device 601 may be a device for using the millimeter wave band in the OFDM system. In the millimeter wave band, since the bandwidth is wider, the change rate between wavelengths may become larger. In the millimeter wave band, it may be difficult to ignore the angle change. For example, when a bandwidth of 8 GHz is used in a 60 GHz band, a change ratio between a wavelength corresponding to a center frequency of the bandwidth and a wavelength corresponding to an end frequency of the bandwidth may be 1.13. When this is converted into an angle, data may be transmitted in a direction that is deviated about 42 degrees from a target direction. As a wider bandwidth is used, the deviation degree from the targeted direction may further increase.

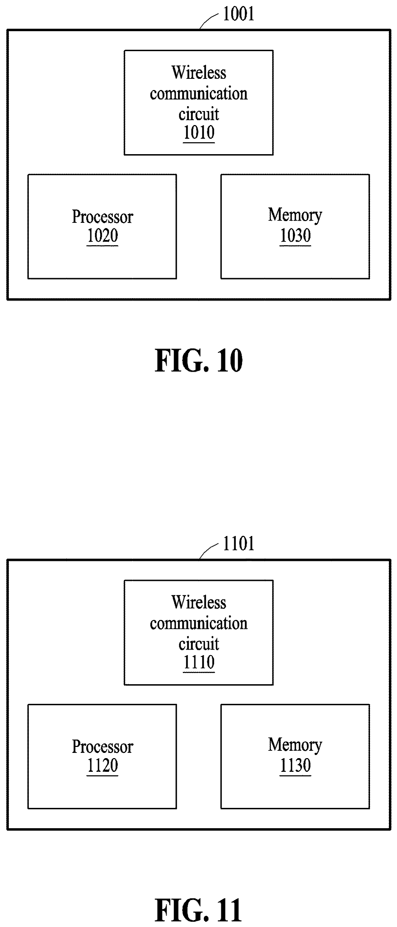

FIG. 10 illustrates a schematic block diagram of an AP according to an embodiment.

According to an embodiment, an AP 1001 (e.g., the AP 302 of FIG. 3 or the electronic device 1904 of FIG. 19) (e.g., an initiator of beam sector sweep) may use an OFDM system when performing millimeter wave band-based beam sector sweep. When performing sector sweep, the AP 1001 may use multi-carriers (e.g., a plurality of sub-carriers) rather than a single carrier. As described above, as the frequency band becomes higher and the bandwidth becomes wider, a wavelength difference (e.g., a sub-carrier spacing) between multi-carriers may also increase. The AP 1001 may perform beam sector sweep considering the sub-carrier spacing at a level that may not be ignored in the millimeter wave band.

According to an embodiment, the AP 1001 may adaptively use a time domain and a frequency domain of the OFDM system. In some embodiments, the AP 1001 may not only deviate a sector ID in the time domain but also adaptively use sub-carriers in the frequency domain. In the AP 1001, each of sub-carriers (or a group of sub-carriers) in the millimeter wave band may transmit one sector sweep frame.

Referring to FIG. 10, according to an embodiment, the AP 1001 may include a wireless communication circuit 1010, a processor 1020, and a memory 1030. The wireless communication circuit 1010 may be configured to transmit and receive a wireless signal. The wireless communication circuit 1010 may be a Wi-Fi chipset. The wireless communication circuit 1010 may support a high-frequency band of 24 GHz or higher. The processor 1020 may be operatively connected to the wireless communication circuit 1010. The memory 1030 may store one or more instructions executable by the processor 1020. The AP 1001 may correspond to an electronic device to be described with reference to FIG. 19 (e.g., the electronic device 1904 of FIG. 19). Therefore, a duplicate description of such to be described with reference to FIG. 19 will be omitted. Operations performed by the AP 1001 may include operations performed by the wireless communication circuit 1010, and operations performed by the processor 1020 through the wireless communication circuit 1010.

According to an embodiment, the memory 1030 may include one or more memories. The instructions stored in the memory 1030 may be stored in a single memory. The instructions stored in the memory 1030 may be distributed and stored in a plurality of memories. The instructions stored in the memory 1030 may be executed individually or collectively by the processor 1020 to cause the AP 1001 to perform and/or control the operation of the AP described with reference to FIGS. 4 to 18.

According to an embodiment, the processor 1020 may be implemented as circuitry (e.g., processing circuitry) such as a system-on-chip (SoC) or an integrated circuit (IC). The processor 1020 may include one or more processors. For example, the processor 1020 may include a combination of one or more processors such as a CPU, a GPU, an MPU, an application processor, and a communication processor (CP). The instructions stored in the memory 1030 may be executed individually or collectively by a single processor to cause the AP 1001 to perform and/or control the operation of the AP described with reference to FIGS. 4 to 18. The instructions stored in the memory 1030 may be executed individually or collectively by a plurality of processors to cause the AP 1001 to perform and/or control the operation of the AP described with reference to FIGS. 4 to 18.

FIG. 11 illustrates a schematic block diagram of a station (STA) according to an embodiment.

According to an embodiment, an STA 1101 (e.g., the STA 301 of FIG. 3 or the electronic device 1901 of FIG. 19) (e.g., a responder of beam sector sweep) may use an OFDM system when performing millimeter wave band-based beam sector sweep. When performing sector sweep, the STA 1101 may use multi-carriers (e.g., a plurality of sub-carriers) rather than a single carrier. As described above, as the frequency band becomes higher and the bandwidth becomes wider, a wavelength difference (e.g., a sub-carrier spacing) between multi-carriers may also increase. The STA 1101 may perform beam sector sweep considering the sub-carrier spacing at a level that may not be ignored in the millimeter wave band.

According to an embodiment, the STA 1101 may adaptively use a time domain and a frequency domain of the OFDM system. In some embodiments, the STA 1101 may not only deviate a sector ID in the time domain but also adaptively use sub-carriers in the frequency domain. In the STA 1101, each of sub-carriers (or a group of sub-carriers) in the millimeter wave band may transmit one sector sweep frame.

Referring to FIG. 11, according to an embodiment, the STA 1101 may include a wireless communication circuit 1110, a processor 1120, and a memory 1130. The wireless communication circuit 1110 may be configured to transmit and receive a wireless signal. The wireless communication circuit 1110 may be a Wi-Fi chipset. The wireless communication circuit 1110 may support a high-frequency band of 24 GHz or higher. The processor 1120 may be operatively connected to the wireless communication circuit 1110. The memory 1130 may store one or more instructions executable by the processor 1120. The STA 1101 may correspond to an electronic device to be described with reference to FIG. 19 (e.g., the electronic device 1901 of FIG. 19). Therefore, a duplicate description of such to be described with reference to FIG. 19 will be omitted. Operations performed by the STA 1101 may include operations performed by the wireless communication circuit 1110, and operations performed by the processor 1120 through the wireless communication circuit 1110.

According to an embodiment, the memory 1130 may include one or more memories. The instructions stored in the memory 1130 may be stored in a single memory. The instructions stored in the memory 1130 may be distributed and stored in a plurality of memories. The instructions stored in the memory 1130 may be executed individually or collectively by the processor 1120 to cause the STA 1101 to perform and/or control the operation of the STA described with reference to FIGS. 4 to 18.

According to an embodiment, the processor 1120 may be implemented as circuitry (e.g., processing circuitry) such as a system-on-chip (SoC) or an integrated circuit (IC). The processor 1120 may include one or more processors. For example, the processor 1120 may include a combination of one or more processors such as a CPU, a GPU, an MPU, an application processor, and a communication processor (CP). The instructions stored in the memory 1130 may be executed individually or collectively by a single processor to cause the STA 1101 to perform and/or control the operation of the STA described with reference to FIGS. 4 to 18. The instructions stored in the memory 1130 may be executed individually or collectively by a plurality of processors to cause the STA 1101 to perform and/or control the operation of the STA described with reference to FIGS. 4 to 18.

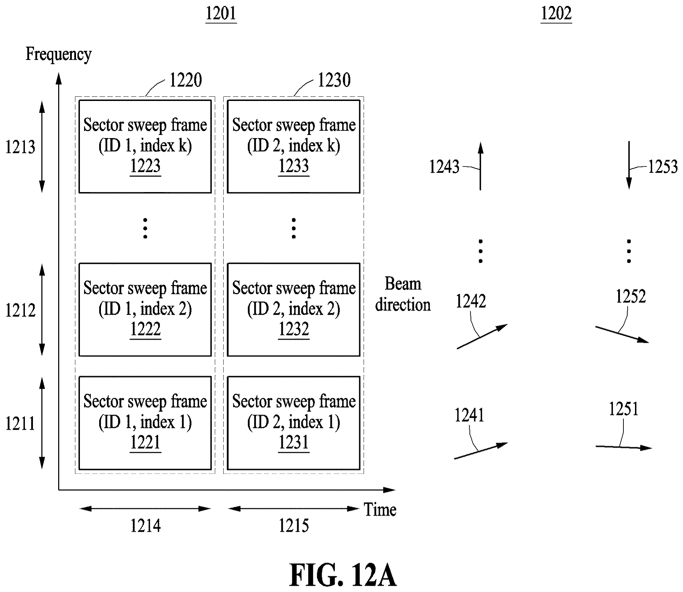

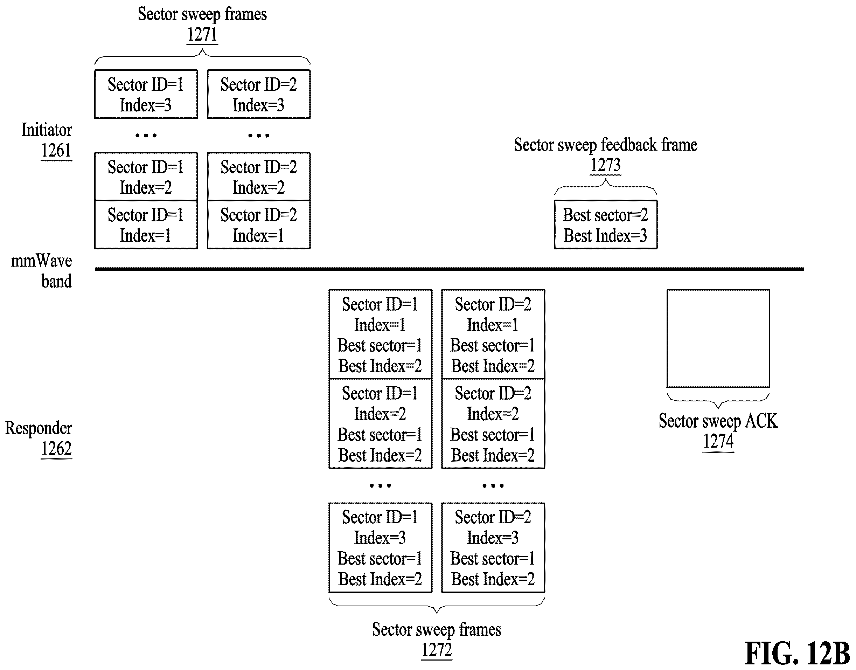

FIGS. 12A and 12B are diagrams illustrating sector sweep of beamforming training according to an embodiment.

Referring to FIG. 12A, according to an embodiment, an electronic device (e.g., the AP 1001 of FIG. 10 and the STA 1101 of FIG. 11) may transmit one or more sector sweep frames for beamforming based on sub-carriers of a millimeter wave band.

According to an embodiment, in the electronic device (e.g., the AP 1001 and the STA 1101), each of sub-carriers (or a group of sub-carriers) in the millimeter wave band may transmit one sector sweep frame (e.g., see 1201). For example, a first sub-carrier of a first frequency 1211 may transmit a sector sweep frame 1221. For example, a second sub-carrier of a second frequency 1212 may transmit a sector sweep frame 1222.

According to an embodiment, a sector sweep frame may include a sector ID and a sub-carrier index. The sector sweep frame 1221 may include, for example, a sector ID (e.g., ID 1) and a sub-carrier index (e.g., Index 1). The sector ID may correspond to a direction of a beam formed by a reference sub-carrier (e.g., a sub-carrier having a center frequency in the bandwidth). The sub-carrier index may correspond to a frequency of the sub-carrier. The sub-carrier index may be a unique value for each sub-carrier. The sub-carrier index may be information that is already exchanged between electronic devices (e.g., the AP 1001 and the STA 1101). The sub-carrier index may be information that is broadcast in advance through a beacon of an initiator (e.g., the AP 1001).

According to an embodiment, the electronic device (e.g., the AP 1001 and the STA 1101) may transmit a first set 1220 of sector sweep frames (e.g., 1221, 1222, and 1223) with the same sector ID (e.g., ID 1). The sector sweep frames (e.g., 1221, 1222, and 1223) with the same sector ID (e.g., ID 1) may be transmitted through different sub-carriers, respectively, in the same time domain (or time duration) (e.g., 1214) (e.g., the same time interval and/or the same time point). The sector sweep frames transmitted through different sub-carriers in the same time domain may be transmitted in different directions in the same time domain (e.g., see 1202). For example, the sector sweep frame 1221 may be transmitted in a first direction 1241 through the first sub-carrier of the first frequency 1211. For example, the sector sweep frame 1222 may be transmitted in a second direction 1242 through the second sub-carrier of the second frequency 1212.

According to an embodiment, the electronic device (e.g., the AP 1001 and the STA 1101) may transmit the first set 1220 of the sector sweep frames (e.g., 1221, 1222, and 1223) and a second set 1230 of sector sweep frames (e.g., 1231, 1232, and 1233). The first set 1220 and the second set 1230 may be transmitted in different time domains. For example, the first set 1220 may be transmitted in a first time domain 1214. For example, the second set 1230 may be transmitted in a second time domain 1215.

According to an embodiment, the electronic device (e.g., the AP 1001 and the STA 1101) may adaptively use a time domain and a frequency domain of an OFDM system. Compared to FIG. 4, the electronic device (e.g., the AP 1001 and the STA 1101) may use frequency resources of the OFDM system, thereby saving time resources. For example, the electronic device (e.g., the AP 1001 and the STA 1101) may transmit a sector sweep frame in a direction of 180 degrees with only two units of time resources (e.g., two time domain 1214 and 1215). In FIG. 12A, the time resources used by the electronic device (e.g., the AP 1001 and the STA 1101) is shown as 2 units, but embodiments are not limited thereto. In addition, the angle covered by the electronic device (e.g., the AP 1001 and the STA 1101) is not limited to 180 degrees.

According to an embodiment, a sector sweep frame transmitted through one sub-carrier (or one sub-carrier group) may be generated in a format defined in the IEEE 802.11ad/ay standard. However, embodiments are not limited thereto, and a new type of sector sweep frame may be used for beam training.

Referring to FIG. 12B, according to an embodiment, an initiator 1261 (e.g., the AP 1001) and a responder 1262 (e.g., the STA 1101) may confirm sector sweep performed based on the OFDM system. The initiator 1261 (e.g., the AP 1001) may generate sector sweep frames 1271. Each of the sector sweep frames 1271 may be transmitted externally based on different beam directions.

According to an embodiment, the responder 1262 (e.g., the STA 1101) may determine a sector sweep frame received with a strongest signal among the received sector sweep frames 1271. The responder 1262 (e.g., the STA 1101) may determine a sector ID (e.g., ID 1) and a sub-carrier index (e.g., Index 2) of the sector sweep frame received with a strongest signal among the received sector sweep frames 1271.

According to an embodiment, the responder 1262 (e.g., the STA 1101) may generate sector sweep frames 1272 by including information (e.g., feedback information) (e.g., Best sector ID 1, Best Index 2) about the sector sweep frame received with a strongest signal. Each of the sector sweep frames 1272 may be transmitted externally based on different beam directions.

According to an embodiment, the initiator 1261 (e.g., the AP 1001) may determine a sector sweep frame received with a strongest signal among the received sector sweep frames 1272. The initiator 1261 (e.g., the AP 1001) may determine a sector ID (e.g., ID 2) and a sub-carrier index (e.g., Index 3) of the sector sweep frame received with a strongest signal among the received sector sweep frames 1272.

According to an embodiment, the initiator 1261 (e.g., the AP 1001) may generate a sector sweep feedback frame 1273 by including information (e.g., feedback information) (e.g., Best sector ID 2, Best Index 3) about the sector sweep frame received with a strongest signal. The initiator 1261 (e.g., the AP 1001) may transmit the sector sweep feedback frame 1273 to the responder 1262 (e.g., the STA 1101). The responder 1262 (e.g., the STA 1101) may return a sector sweep acknowledgment frame 1274 to the initiator 1261 (e.g., the AP 1001) in response to the reception of the sector sweep feedback frame 1273.

According to an embodiment, each of the initiator 1261 (e.g., the AP 1001) and the responder 1262 (e.g., the STA 1101) may perform beamforming after receiving the feedback information from the other party. Each of the initiator 1261 (e.g., the AP 1001) and the responder 1262 (e.g., the STA 1101) may determine a sector ID and a sub-carrier index to be used for data transmission based on the feedback information. As described above, the sector ID may correspond to a direction of a beam formed by a reference sub-carrier (e.g., a sub-carrier having a center frequency in the bandwidth). The sub-carrier index may correspond to a frequency of the sub-carrier. The sub-carrier index may be a unique value for each sub-carrier.

According to an embodiment, each of the initiator 1261 (e.g., the AP 1001) and the responder 1262 (e.g., the STA 1101) may determine phase delay to be applied to each of antennas considering the determined sector ID (e.g., a direction of a beam formed by a reference sub-carrier) and the determined sub-carrier index (e.g., a frequency of the determined sub-carrier). The initiator 1261 (e.g., the AP 1001) and the responder 1262 (e.g., the STA 1101) may each apply phase delay to the antennas to form a beam. The initiator 1261 (e.g., the AP 1001) and the responder 1262 (e.g., the STA 1101) may each transmit data in a targeted direction through the formed beam.

According to an embodiment, the initiator 1261 (e.g., the AP 1001) and the responder 1262 (e.g., the STA 1101) may adaptively use a time domain and a frequency domain of an OFDM system. Compared to FIG. 4, the initiator 1261 (e.g., the AP 1001) and the responder 1262 (e.g., the STA 1101) may use frequency resources of the OFDM system, thereby saving time resources. For example, the initiator 1261 (e.g., the AP 1001) and the responder 1262 (e.g., the STA 1101) may transmit a sector sweep frame in all directions with two units of time resources (e.g., two time domains) (e.g., two sector IDs). In addition, the initiator 1261 (e.g., the AP 1001) and the responder 1262 (e.g., the STA 1101) may further divide directions in which the sector sweep frames are transmitted, considering the time resources that may be saved. For example, when the initiator 401 (or the responder 402), that wishes to transmit a sector sweep frame in a direction of 180 degrees, transmits 10 sector sweep frames in 18-degree increments, the initiator 1261 (or the responder 1262) may transmit 20 sector sweep frames in 9-degree increments. However, the angle covered by the electronic device (e.g., the AP 1001 and the STA 1101) is not limited to 180 degrees.

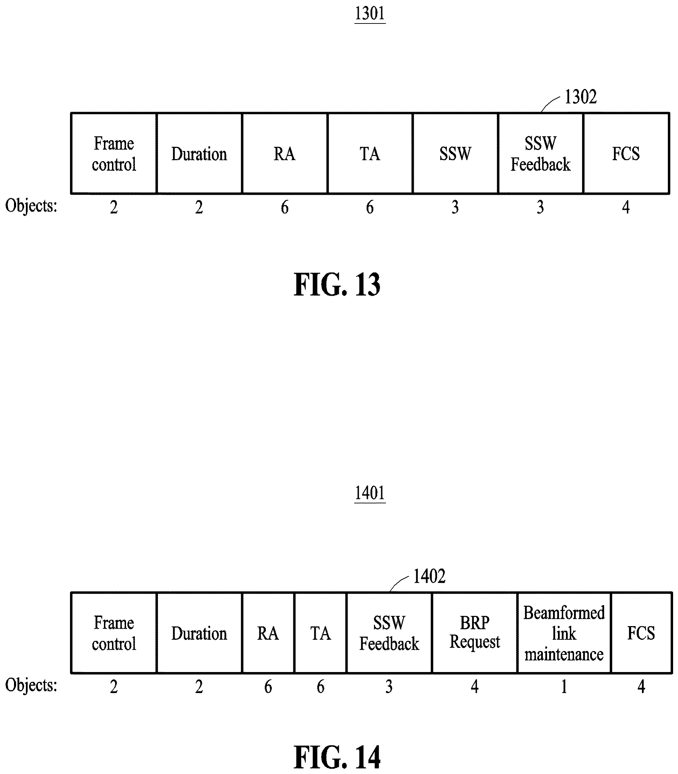

FIGS. 13 to 15 are diagrams illustrating an area in which feedback information about a sector sweep frame is embedded, according to an embodiment.

Referring to FIG. 13, according to an embodiment, the format of a sector sweep frame 1301 defined in IEEE 802.11ad/ay may be confirmed. Feedback information (e.g., a sector ID and a sub-carrier index of the sector sweep frame received with a strongest signal) may be included (e.g., embedded) in a sector sweep feedback field 1302 of the sector sweep frame 1301.

Referring to FIG. 14, according to an embodiment, the format of a sector sweep feedback frame 1401 defined in IEEE 802.11ad/ay may be confirmed. Feedback information (e.g., a sector ID and a sub-carrier index of the sector sweep frame received with a strongest signal) may be included (e.g., embedded) in a sector sweep feedback field 1402 of the sector sweep frame 1401.

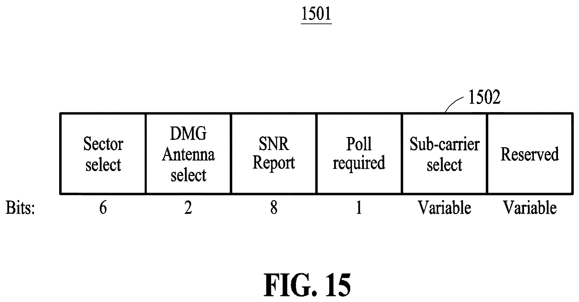

Referring to FIG. 15, according to an embodiment, a sector sweep feedback field 1501 mentioned with reference to FIGS. 13 and 14 may be confirmed. Feedback information (e.g., a sector ID and a sub-carrier index of the sector sweep frame received with a strongest signal) may be included in a sub-carrier select field 1502. The sub-carrier select field 1502 may be a field that is newly added by reducing a length of a reserved field.

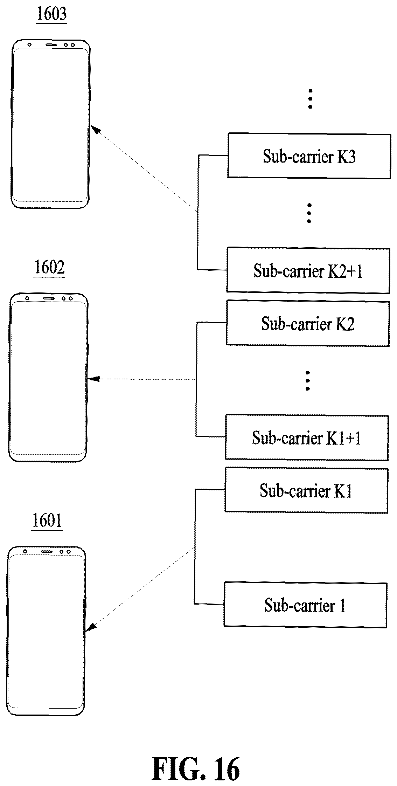

FIG. 16 is a diagram illustrating a method of transmitting data to a plurality of electronic devices according to an embodiment.

Referring to FIG. 16, according to an embodiment, an AP (e.g., the AP 1001 of FIG. 10) may transmit data to a plurality of electronic devices 1601, 1602, and 1603. The AP 1001 may transmit data based on a sub-carrier group. The AP 1001 may map a plurality of sub-carriers (e.g., a sub-carrier group), instead of one sub-carrier, to one electronic device based on feedback information.

According to an embodiment, the AP 1001 may determine a sector ID and a sub-carrier group to be mapped to each of the electronic devices 1601, 1602, and 1603 based on the feedback information. For example, the AP 1001 may determine to use sub-carriers 1 to K1 to transmit data to the electronic device 1601. For example, the AP 1001 may determine to use sub-carriers K1 + 1 to K2 to transmit data to the electronic device 1602.

According to an embodiment, the AP 1001 may transmit data to each of the electronic devices 1601, 1602, and 1603 based on the determined sector ID (e.g., a direction of a beam formed by a reference sub-carrier) and the determined sub-carrier group.

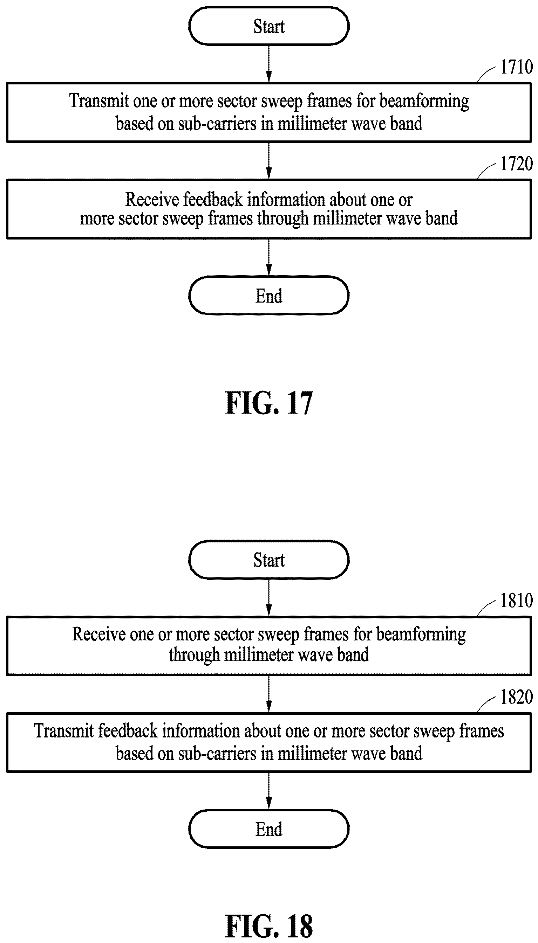

FIGS. 17 and 18 are flowcharts illustrating an operating method of an electronic device according to an embodiment.

Referring to FIG. 17, according to an embodiment, operations 1710 and 1720 may be performed sequentially, but not be necessarily performed sequentially. For example, the order of operations 1710 and 1720 may be changed, and two operations may be performed in parallel.

According to an embodiment, in operation 1710, an AP (e.g., an initiator) (e.g., the AP 302 of FIG. 3, the AP 1001 of FIG. 10, the initiator 1261 of FIG. 12B, or the electronic device 1904 of FIG. 19) may transmit one or more sector sweep frames for beamforming based on sub-carriers in the millimeter wave band.

According to an embodiment, in operation 1720, the AP (e.g., the initiator) may receive feedback information about the one or more sector sweep frames through the millimeter wave band.

According to an embodiment, operations performed by the AP may include operations performed by a wireless communication circuit (e.g., the wireless communication circuit 1010 of FIG. 10), and operations performed by a processor (e.g., the processor 1020 of FIG. 10) through the wireless communication circuit.

Referring to FIG. 18, according to an embodiment, operations 1810 and 1820 may be performed sequentially, but not be necessarily performed sequentially. For example, the order of operations 1810 and 1820 may be changed, and two operations may be performed in parallel.

According to an embodiment, in operation 1810, a STA (e.g., a responder) (e.g., the STA 301 of FIG. 3, the STA 1101 of FIG. 11, the responder 1262 of FIG. 12B, or the electronic device 1901 of FIG. 19) may receive one or more sector sweep frames for beamforming from an external electronic device (e.g., the AP 302 of FIG. 3, the AP 1001 of FIG. 10, the initiator 1261 of FIG. 12B, or the electronic device 1904 of FIG. 19) through a millimeter wave band.

According to an embodiment, in operation 1820, the STA (e.g., the responder) may transmit feedback information about the one or more sector sweep frames to the external electronic device based on sub-carriers in the millimeter wave band.

According to an embodiment, operations performed by the STA may include operations performed by a wireless communication circuit (e.g., the wireless communication circuit 1110 of FIG. 11 or a wireless communication module 1992 of FIG. 19), and operations performed by a processor (e.g., the processor 1120 of FIG. 11 or a processor 1920 of FIG. 19) through the wireless communication circuit.

FIG. 19 is a block diagram of an electronic device in a network environment according to an embodiment.

Referring to FIG. 19, the electronic device 1901 in a network environment 1900 may communicate with the electronic device 1902 via a first network 1998 (e.g., a short-range wireless communication network) or at least one of the electronic device 1904 or a server 1908 via a second network 1999 (e.g., a long-range wireless communication network). According to an embodiment, the electronic device 1901 may communicate with the electronic device 1904 via the server 1908. According to an embodiment, the electronic device 1901 may include a processor 1920, a memory 1930, an input module 1950, a sound output module 1955, a display module 1960, an audio module 1970, and a sensor module 1976, an interface 1977, a connecting terminal 1978, a haptic module 1979, a camera module 1980, a power management module 1988, a battery 1989, a communication module 1990, a subscriber identification module (SIM) 1996, or an antenna module 1997. In some embodiments, at least one of the components (e.g., the connecting terminal 1978) may be omitted from the electronic device 1901, or one or more other components may be added in the electronic device 1901. In some embodiments, some of the components (e.g., the sensor module 1976, the camera module 1980, or the antenna module 1997) may be integrated as a single component (e.g., the display module 1960).

The processor 1920 may execute, for example, software (e.g., a program 1940) to control at least one other component (e.g., a hardware or software component) of the electronic device 1901 connected to the processor 1920, and may perform various data processing or computation. According to an embodiment, as at least a part of data processing or computation, the processor 1920 may store a command or data received from another component (e.g., the sensor module 1976 or the communication module 1990) in a volatile memory 1932, process the command or the data stored in the volatile memory 1932, and store resulting data in a non-volatile memory 1934. According to an embodiment, the processor 1920 may include a main processor 1921 (e.g., a central processing unit (CPU) or an application processor (AP)), or an auxiliary processor 1923 (e.g., a graphics processing unit (GPU), a neural processing unit (NPU), an image signal processor (ISP), a sensor hub processor, or a communication processor (CP)) that is operable independently from, or in conjunction with the main processor 1921. For example, when the electronic device 1901 includes the main processor 1921 and the auxiliary processor 1923, the auxiliary processor 1923 may be adapted to consume less power than the main processor 1921 or to be specific to a specified function. The auxiliary processor 1923 may be implemented separately from the main processor 1921 or as a portion of the main processor 1921.

The auxiliary processor 1923 may control at least some of functions or states related to at least one (e.g., the display module 1960, the sensor module 1976, or the communication module 1990) of the components of the electronic device 1901, instead of the main processor 1921 while the main processor 1921 is in an inactive (e.g., sleep) state or along with the main processor 1921 while the main processor 1921 is an active state (e.g., executing an application). According to an embodiment, the auxiliary processor 1923 (e.g., an ISP or a CP) may be implemented as a portion of another component (e.g., the camera module 1980 or the communication module 1990) that is functionally related to the auxiliary processor 1923. According to an embodiment, the auxiliary processor 1923 (e.g., an NPU) may include a hardware structure specified for processing of an artificial intelligence (AI) model. The AI model may be generated by machine learning. Such learning may be performed by, for example, the electronic device 1901 in which artificial intelligence is performed, or performed via a separate server (e.g., the server 1908). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 1930 may store various pieces of data used by at least one component (e.g., the processor 1920 or the sensor module 1976) of the electronic device 1901. The various pieces of data may include, for example, software (e.g., the program 1940) and input data or output data for a command related thereto. The memory 1930 may include the volatile memory 1932 or the non-volatile memory 1934.

The program 1940 may be stored as software in the memory 1930, and may include, for example, an operating system (OS) 1942, middleware 1944, or an application 1946.

The input module 1950 may receive a command or data to be used by another component (e.g., the processor 1920) of the electronic device 1901, from the outside (e.g., a user) of the electronic device 1901. The input module 1950 may include, for example, a microphone, a mouse, a keyboard, a key (e.g., a button), or a digital pen (e.g., a stylus pen).

The sound output module 1955 may output a sound signal to the outside of the electronic device 1901. The sound output module 1955 may include, for example, a speaker or a receiver. The speaker may be used for general purposes, such as playing multimedia or playing record. The receiver may be used to receive an incoming call. According to an embodiment, the receiver may be implemented separately from the speaker or as a part of the speaker.

The display module 1960 may visually provide information to the outside (e.g., a user) of the electronic device 1901. The display module 1960 may include, for example, a display, a hologram device, or a projector and control circuitry to control a corresponding one of the display, the hologram device, and the projector. According to an embodiment, the display module 1960 may include a touch sensor adapted to detect a touch, or a pressure sensor adapted to measure the intensity of force incurred by the touch.

The audio module 1970 may convert a sound into an electric signal or vice versa. According to an embodiment, the audio module 1970 may obtain the sound via the input module 1950, or output the sound via the sound output module 1955 or an external electronic device (e.g., the electronic device 1902 such as a speaker or a headphone) directly or wirelessly connected to the electronic device 1901.

The sensor module 1976 may detect an operational state (e.g., power or temperature) of the electronic device 1901 or an environmental state (e.g., a state of a user) external to the electronic device 1901, and generate an electric signal or data value corresponding to the detected state. According to an embodiment, the sensor module 1976 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1977 may support one or more specified protocols to be used for the electronic device 1901 to be coupled with the external electronic device (e.g., the electronic device 1902) directly (e.g., by wire) or wirelessly. According to an embodiment, the interface 1977 may include, for example, a high-definition multimedia interface (HDMI), a universal serial bus (USB) interface, a secure digital (SD) card interface, or an audio interface.

The connecting terminal 1978 may include a connector via which the electronic device 1901 may be physically connected to an external electronic device (e.g., the electronic device 1902). According to an embodiment, the connecting terminal 1978 may include, for example, an HDMI connector, a USB connector, an SD card connector, or an audio connector (e.g., a headphone connector).

The haptic module 1979 may convert an electric signal into a mechanical stimulus (e.g., a vibration or a movement) or an electrical stimulus which may be recognized by a user via his or her tactile sensation or kinesthetic sensation. According to an embodiment, the haptic module 1979 may include, for example, a motor, a piezoelectric element, or an electric stimulator.

The camera module 1980 may capture a still image and moving images. According to an embodiment, the camera module 1980 may include one or more lenses, image sensors, image signal processors, or flashes.

The power management module 1988 may manage power supplied to the electronic device 1901. According to an embodiment, the power management module 1988 may be implemented as, for example, at least a part of a power management integrated circuit (PMIC).

The battery 1989 may supply power to at least one component of the electronic device 1901. According to an embodiment, the battery 1989 may include, for example, a primary cell which is not rechargeable, a secondary cell which is rechargeable, or a fuel cell.

The communication module 1990 may support establishing a direct (e.g., wired) communication channel or a wireless communication channel between the electronic device 1901 and the external electronic device (e.g., the electronic device 1902, the electronic device 1904, or the server 1908) and performing communication via the established communication channel. The communication module 1990 may include one or more CPs that are operable independently of the processor 1920 (e.g., an AP) and that support a direct (e.g., wired) communication or a wireless communication. According to an embodiment, the communication module 1990 may include a wireless communication module 1992 (e.g., a cellular communication module, a short-range wireless communication module, or a global navigation satellite system (GNSS) communication module) or a wired communication module 1994 (e.g., a local area network (LAN) communication module, or a power line communication (PLC) module). A corresponding one of these communication modules may communicate with the external electronic device 1904 via the first network 1998 (e.g., a short-range communication network, such as Bluetooth^{™}, wireless-fidelity (Wi-Fi) direct, or infrared data association (IrDA)) or the second network 1999 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multi components (e.g., multiple chips) separate from each other. The wireless communication module 1992 may identify and authenticate the electronic device 1901 in a communication network, such as the first network 1998 or the second network 1999, using subscriber information (e.g., international mobile subscriber identity (IMSI)) stored in the SIM 1996.

The wireless communication module 1992 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1992 may support a high-frequency band (e.g., a mmWave band) to achieve, e.g., a high data transmission rate. The wireless communication module 1992 may support various technologies for securing performance on a high-frequency band, such as, e.g., beamforming, massive multiple-input and multiple-output (massive MIMO), full dimensional MIMO (FD-MIMO), an array antenna, analog beamforming, or a large scale antenna. The wireless communication module 1992 may support various requirements specified in the electronic device 1901, an external electronic device (e.g., the electronic device 1904), or a network system (e.g., the second network 1999). According to one embodiment, the wireless communication module 1992 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 1997 may transmit or receive a signal or power to or from the outside (e.g., an external electronic device) of the electronic device 1901. According to an embodiment, the antenna module 1997 may include an antenna including a radiating element including a conductive material or a conductive pattern formed in or on a substrate (e.g., a printed circuit board (PCB)). According to one embodiment, the antenna module 1997 may include a plurality of antennas (e.g., array antennas). In such a case, at least one antenna appropriate for a communication scheme used in a communication network, such as the first network 1998 or the second network 1999, may be selected by, for example, the communication module 1990 from the plurality of antennas. The signal or power may be transmitted or received between the communication module 1990 and the external electronic device via the at least one selected antenna. According to an embodiment, another component (e.g., a radio frequency integrated circuit (RFIC)) other than the radiating element may be additionally formed as a part of the antenna module 1997.

According to an embodiment, the antenna module 1997 may form a mmWave antenna module. According to an embodiment, the mmWave antenna module may include a PCB, an RFIC disposed on a first surface (e.g., the bottom surface) of the PCB or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals in the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1901 and the external electronic device 1904 via the server 1908 coupled with the second network 1999. Each of the external electronic devices 1902 and 1904 may be a device of the same type as or a different type from the electronic device 1901. According to an embodiment, all or some of operations to be executed by the electronic device 1901 may be executed at one or more external electronic devices (e.g., the external devices 1902 and 1904, and the server 1908). For example, if the electronic device 1901 needs to perform a function or a service automatically or in response to a request from a user or another device, instead of, or in addition to, executing the function or the service, the electronic device 1901 may request the one or more external electronic devices to perform at least part of the function or the service. The one or more external electronic devices receiving the request may perform the at least part of the function or the service requested, or an additional function or an additional service related to the request, and may transfer an outcome of the performing to the electronic device 1901. The electronic device 1901 may provide the outcome, with or without further processing of the outcome, as at least part of a reply to the request. To that end, a cloud computing, distributed computing, mobile edge computing (MEC), or client-server computing technology may be used, for example. The electronic device 1901 may provide ultra low-latency services using, e.g., distributed computing or mobile edge computing. In another embodiment, the external electronic device 1904 may include an Internet-of-things (IoT) device. The server 1908 may be an intelligent server using machine learning and/or a neural network. According to an embodiment, the external electronic device 1904 or the server 1908 may be included in the second network 1999. The electronic device 1901 may be applied to intelligent services (e.g., smart home, smart city, smart car, or healthcare) based on 5G communication technology or IoT-related technology.

The electronic device according to embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

It should be appreciated that embodiments of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B," "at least one of A and B," "at least one of A or B," "A, B or C," "at least one of A, B and C," and "at least one of A, B, or C," may include any one of the items listed together in the corresponding one of the phrases, or all possible combinations thereof. Terms such as "1^{st}," and "2^{nd}," or "first" or "second" may simply be used to distinguish the component from other components in question, and do not limit the components in other aspects (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., by wire), wirelessly, or via a third element.

As used in connection with embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments of the disclosure may be implemented as software (e.g., a program) including one or more instructions that are stored in a storage medium (e.g., internal memory or external memory) that is readable by a machine (e.g., an electronic device). For example, a processor (e.g., the processor 1920) of the machine (e.g., the electronic device 1901) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore^{™}), or between two user devices (e.g., smartphones) directly. If distributed online, at least portion of the computer program product may be temporarily generated or at least temporarily stored in the machine-readable storage medium, such as memory of the manufacturer's server, a server of the application store, or a relay server.

According to embodiments, each component (e.g., a module or a program) of the above-described components may include a single entity or multiple entities, and some of the multiple entities may be separately disposed in different components. According to embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

An electronic device (e.g., the AP 302 of FIG. 3, the AP 1001 of FIG. 10, the initiator 1261 of FIG. 12B, or the electronic device 1904 of FIG. 19) may include a wireless communication circuit (e.g., the wireless communication circuit 1010 of FIG. 10) configured to transmit and receive a wireless signal. The electronic device may include a processor (e.g., the processor 1020 of FIG. 10) operatively connected to the wireless communication circuit. The electronic device may include a memory (e.g., the memory 1030 of FIG. 10) including instructions. The instructions, when executed by the processor individually or collectively, may cause the electronic device to transmit one or more sector sweep frames for beamforming, based on sub-carriers of a millimeter wave band. The instructions, when executed by the processor individually or collectively, may cause the electronic device to receive feedback information on the one or more sector sweep frames through the millimeter wave band. The feedback information may include a sector identification (ID) of a sector sweep frame received with a strongest signal by an external electronic device (e.g., the STA 301 of FIG. 3, the STA 1101 of FIG. 11, the responder 1262 of FIG. 12B, or the electronic device 1901 of FIG. 19) among the one or more sector sweep frames. The feedback information may include a sub-carrier index of the sector sweep frame received with the strongest signal.

According to an embodiment, the one or more sector sweep frames may include a set of sector sweep frames having the same sector ID. The sector sweep frames having the same sector ID may be transmitted through different sub-carriers respectively on the same time domain.

According to an embodiment, the one or more sector sweep frames may include a first set of sector sweep frames and a second set of sector sweep frames. The first set and the second set may be transmitted on different time domains. A sector ID of the first set may be different from a sector ID of the second set.

According to an embodiment, the feedback information may be included in a sector sweep feedback field of a sector sweep frame received from the external electronic device.

According to an embodiment, the feedback information may be included in a sub-carrier select field of the sector sweep feedback field.

According to an embodiment, the instructions, when executed by the processor individually or collectively, may cause the electronic device to transmit a sector sweep feedback frame in response to the reception of the feedback information. The instructions, when executed by the processor individually or collectively, may cause the electronic device to receive a sector sweep acknowledgement frame from the external electronic device. The sector sweep feedback frame may include a sector ID of a sector sweep frame received with a strongest signal among sector sweep frames received from the external electronic device. The sector sweep feedback frame may include a sub-carrier index of the sector sweep frame received with the strongest signal among the sector sweep frames received from the external electronic device.

According to an embodiment, the instructions, when executed by the processor individually or collectively, may cause the electronic device to determine a sector ID and a sub-carrier group to be mapped to each of one or more external electronic devices based on the feedback information. The instructions, when executed by the processor individually or collectively, may cause the electronic device to transmit data to each of the one or more external electronic devices (e.g., the electronic device 1601, the electronic device 1602, or the electronic device 1603 of FIG. 16) based on the determined sector ID and the determined sub-carrier group.

According to an embodiment, the electronic device may be configured to perform analog beamforming.

An electronic device (e.g., the STA 301 of FIG. 3, the STA 1101 of FIG. 11, the responder 1262 of FIG. 12B, or the electronic device 1901 of FIG. 19) may include a wireless communication circuit (e.g., the wireless communication circuit 1110 of FIG. 11 or the wireless communication module 1992 of FIG. 19) configured to transmit and receive a wireless signal. The electronic device may include a processor (e.g., the processor 1120 of FIG. 11 or the processor 1920 of FIG. 19) operatively connected to the wireless communication circuit. The electronic device may include a memory (e.g., the memory 1130 of FIG. 11 or the memory 1930 of FIG. 19) including instructions. The instructions, when executed by the processor individually or collectively, may cause the electronic device to receive one or more sector sweep frames for beamforming from an external electronic device (e.g., the AP 302 of FIG. 3, or the AP 1001 of FIG. 10, the initiator 1261 of FIG. 12B, or the electronic device 1904 of FIG. 19) through a millimeter wave band. The instructions, when executed by the processor individually or collectively, may cause the electronic device to transmit feedback information on the one or more sector sweep frames to the external electronic device based on sub-carriers of the millimeter wave band. The feedback information may include a sector ID of a sector sweep frame received with a strongest signal among the one or more sector sweep frames. The feedback information may include a sub-carrier index of the sector sweep frame received with the strongest signal.

According to an embodiment, the one or more sector sweep frames may include a set of sector sweep frames having the same sector ID. The sector sweep frames having the same sector ID may be transmitted through different sub-carriers respectively on the same time domain.

According to an embodiment, the one or more sector sweep frames may include a first set of sector sweep frames and a second set of sector sweep frames. The first set and the second set may be transmitted on different time domains. A sector ID of the first set may be different from a sector ID of the second set.

According to an embodiment, the feedback information may be included in a sector sweep feedback field of a sector sweep frame that is transmitted by the electronic device to the external electronic device.

According to an embodiment, the feedback information may be included in a sub-carrier select field of the sector sweep feedback field.

According to an embodiment, the instructions, when executed by the processor individually or collectively, may cause the electronic device to receive a sector sweep feedback frame from the external electronic device. The instructions, when executed by the processor individually or collectively, may cause the electronic device to transmit a sector sweep acknowledgement frame to the external electronic device. The sector sweep feedback frame may include a sector ID of a sector sweep frame received with a strongest signal by the external electronic device among the one or more sector sweep frames. The sector sweep feedback frame may include a sub-carrier index of the sector sweep frame received with the strongest signal by the external electronic device.

According to an embodiment, the instructions, when executed by the processor individually or collectively, may cause the electronic device to determine a sector ID and a sub-carrier index based on the feedback information. The instructions, when executed by the processor individually or collectively, may cause the electronic device to transmit data to the external electronic device based on the determined sector ID and the determined sub-carrier index.

According to an embodiment, the electronic device may be configured to perform analog beamforming.

A method of operating an electronic device incorporating features of the present disclosure may include transmitting one or more sector sweep frames for beamforming, based on sub-carriers of a millimeter wave band. The method may include receiving feedback information on the one or more sector sweep frames through the millimeter wave band. The feedback information may include a sector ID of a sector sweep frame received with a strongest signal by an external electronic device among the one or more sector sweep frames. The feedback information may include a sub-carrier index of the sector sweep frame received with the strongest signal.

According to an embodiment, the one or more sector sweep frames may include a set of sector sweep frames having the same sector ID. The sector sweep frames having the same sector ID may be transmitted through different sub-carriers respectively on the same time domain.

According to an embodiment, the one or more sector sweep frames may include a first set of sector sweep frames and a second set of sector sweep frames. The first set and the second set may be transmitted on different time domains. A sector ID of the first set may be different from a sector ID of the second set.

According to an embodiment, the feedback information may be included in a sector sweep feedback field of a sector sweep frame received from the external electronic device.

Although the present invention has been described in detail with reference to certain preferred configurations thereof, other versions are possible. Embodiments of the present invention can comprise any combination of compatible features shown in the various figures, and these embodiments should not be limited to those expressly illustrated and discussed. Therefore, the spirit and scope of the invention should not be limited to the versions described above.

The foregoing is intended to cover all modifications and alternative constructions falling within the spirit and scope of the invention as expressed in the appended claims, wherein no portion of the disclosure is intended, expressly or implicitly, to be dedicated to the public domain if not set forth in the claims.

### Description of the reference number

1001: AP
1101: STA

## Claims

1. An electronic device (302; 1001; 1261; 1904) comprising:
a wireless communication circuit (1010) configured to transmit and receive a wireless signal;
a processor (1020) operatively connected to the wireless communication circuit; and
a memory 1030) comprising instructions,
wherein the instructions, when executed by the processor individually or collectively, cause the electronic device (302; 1001; 1261; 1904) to:
transmit one or more sector sweep frames for beamforming, using sub-carriers of a millimeter wave band; and
receive feedback information on the one or more sector sweep frames through the millimeter wave band,
wherein the feedback information comprises:
a sector identification (ID) of a sector sweep frame received with a strongest signal by an external electronic device (301; 1101; 1262; 1901) among the one or more sector sweep frames; and
a sub-carrier index of the sector sweep frame received with the strongest signal.

2. The electronic device (302; 1001; 1261; 1904) of claim 1, wherein
the one or more sector sweep frames comprise a set of sector sweep frames having a same sector ID, and
the sector sweep frames having the same sector ID are transmitted through different sub-carriers on a same time domain.

3. The electronic device (302; 1001; 1261; 1904) of one of claims 1 and 2, wherein the one or more sector sweep frames comprise a first set of sector sweep frames and a second set of sector sweep frames, wherein
the first set of sector sweep frames and the second set of sector sweep frames are transmitted on different time domains, and
a sector ID of the first set of sector sweep frames is different from a sector ID of the second set of sector sweep frames.

4. The electronic device (302; 1001; 1261; 1904) of one of claims 1 to 3, wherein the feedback information is included in a sector sweep feedback field of a sector sweep frame received from the external electronic device (301; 1101; 1262; 1901).

5. The electronic device (302; 1001; 1261; 1904) of one of claims 1 to 4, wherein the feedback information is included in a sub-carrier select field of the sector sweep feedback field.

6. The electronic device (302; 1001; 1261; 1904) of one of claims 1 to 5, wherein
the instructions, when executed by the processor individually or collectively, cause the electronic device (302; 1001; 1261; 1904) to further:
transmit a sector sweep feedback frame in response to the reception of the feedback information; and
receive a sector sweep acknowledgement frame from the external electronic device (301; 1101; 1262; 1901), and wherein
the sector sweep feedback frame comprises:
a sector ID of a sector sweep frame received with a strongest signal among sector sweep frames received from the external electronic device (301; 1101; 1262; 1901); and
a sub-carrier index of the sector sweep frame received with the strongest signal among the sector sweep frames received from the external electronic device (301; 1101; 1262; 1901).

7. The electronic device (302; 1001; 1261; 1904) of one of claims 1 to 6, wherein the instructions, when executed by the processor individually or collectively, cause the electronic device (302; 1001; 1261; 1904)to further:
determine a sector ID and a sub-carrier group to be mapped to each of one or more external electronic devices (301; 1101; 1262; 1901) based on the feedback information; and
transmit data to each of the one or more external electronic devices (301; 1101; 1262; 1901) based on the determined sector ID and the determined sub-carrier group.

8. The electronic device (302; 1001; 1261; 1904) of one of claims 1 to 7, wherein the electronic device (302; 1001; 1261; 1904) is configured to perform analog beamforming.

9. An electronic device (301; 1101; 1262; 1901) comprising:
a wireless communication circuit (1110; 1992) configured to transmit and receive a wireless signal;
a processor (1120; 1920) operatively connected to the wireless communication circuit; and
a memory (1130; 1930) comprising instructions,
wherein the instructions, when executed by the processor individually or collectively, cause the electronic device (301; 1101; 1262; 1901) to:
receive one or more sector sweep frames for beamforming from an external electronic device (302; 1001; 1261; 1904) through a millimeter wave band; and
transmit feedback information on the one or more sector sweep frames to the external electronic device (302; 1001; 1261; 1904) based on sub-carriers of the millimeter wave band,
wherein the feedback information comprises:
a sector identification (ID) of a sector sweep frame received with a strongest signal among the one or more sector sweep frames; and
a sub-carrier index of the sector sweep frame received with the strongest signal.

10. The electronic device (301; 1101; 1262; 1901) of claim 9, wherein
the one or more sector sweep frames comprise a set of sector sweep frames having a same sector ID, and
the sector sweep frames having the same sector ID are transmitted through different sub-carriers on a same time domain.

11. The electronic device (301; 1101; 1262; 1901) of claim 9or 10, wherein
the one or more sector sweep frames comprise a first set of sector sweep frames and a second set of sector sweep frames, wherein
the first set of sector seep frames and the second set of sector sweep frames are transmitted on different time domains, and
a sector ID of the first set of sector sweep frames is different from a sector ID of the second set of sector sweep frames.

12. The electronic device (301; 1101; 1262; 1901) of one of claims 9 to 11, wherein the feedback information is included in a sector sweep feedback field of a sector sweep frame that is transmitted by the electronic device (301; 1101; 1262; 1901) to the external electronic device(302; 1001; 1261; 1904).

13. The electronic device (301; 1101; 1262; 1901) of one of claims 9 to 12, wherein the feedback information is included in a sub-carrier select field of the sector sweep feedback field.

14. The electronic device (301; 1101; 1262; 1901) of one of claims 9 to 13, wherein
the instructions, when executed by the processor individually or collectively, cause the electronic device (301; 1101; 1262; 1901) to further:
receive a sector sweep feedback frame from the external electronic device(302; 1001; 1261; 1904); and
transmit a sector sweep acknowledgement frame to the external electronic device (302; 1001; 1261; 1904), and wherein
the sector sweep feedback frame comprises:
a sector ID of a sector sweep frame received with a strongest signal by the external electronic device (302; 1001; 1261; 1904) among the one or more sector sweep frames; and
a sub-carrier index of the sector sweep frame received with the strongest signal by the external electronic device (302; 1001; 1261; 1904).

15. The electronic device (301; 1101; 1262; 1901) of one of claims 9to 14, wherein the instructions, when executed by the processor individually or collectively, cause the electronic device (301; 1101; 1262; 1901) to further:
determine a sector ID and a sub-carrier index based on the feedback information; and
transmit data to the external electronic device (302; 1001; 1261; 1904) based on the determined sector ID and the determined sub-carrier index.
